# EUROPEAN PATENT APPLICATION

(11) **EP 1 990 936 A1**
(43) Date of publication of application: **12.11.2008**
(21) Application number: 06804926.1
(22) Date of filing: 13.10.2006
(51) Int. Cl.: H04B 10/00

(54) **ILLUMINATION LIGHT WIRELESS COMMUNICATION SYSTEM**

(30) Priority: 17.02.2006 CN 200610008311
(71) Applicant: Huawei Technologies Co., Ltd., Longgang District, Shenzhen Guangdong 518129 (CN)
(72) Inventor: ZHENG, Ruobin, Guangdong 518129 (CN)
(74) Representative: Tolan, Olivia
(86) International application number: PCT/CN2006/002702
(87) International publication number: WO 2007/093097

(57) **Abstract**

An illumination light wireless communication system, can be used in illumination and to communicate with remote communication device(110). The system includes an illumination communication means(120), an illumination communication terminal(130) and a communication terminal(140). The illumination communication means(120) is used to receive the source signal from the remote communication device(110), transform the received source signal into optical signal and then transmit it wirelsssly; the illumination communication terminal(130) is used to transform the received optical signal into electrical signal and then transmit it to the communication terminal(140); the communication terminal(140) is used to receive the electrical signal from the illumination communication terminal(130) and perform a corresponding progress, or transmit the processed electrical signal to the illumination communication terminal(130), namely reverse transmission. The light emitted from the illumination communication means(120) and/or the illumination communication terminal(130) can be used as optical wireless communication source and the source for illumination, It eliminates the bias that the illumination light couldn't be the wireless communication carrier. Furthermore, the invention can be used not only in-house, but also out-house.

## Description

This application claims priority to Chinese Patent Application No. 200610008311,8, filed on February 17, 2006 and entitled *Illumination Light Wireless Communication System*, contents of which are incorporated herein by reference in their entirety.

### Field of the Invention

The present invention relates to the field of communication technologies, and particularly to an illumination light wireless communication system.

### Background of the Invention

There are mainly three types of wireless communication prevailing today.

One type of wireless communication is radio wave communication, which has been used as the signal bearer for wireless communication for a long time, and is still widely used today. However, it has the following disadvantages.

1. Radio wave communication produces strong electromagnet interference, and therefore the spectrum is under the control of the government;

2. The radio bandwidth is relatively low, and its available frequency resources are rare;

3. The radio wave is open to the space, and usually can penetrate walls, resulting in pool security;

4. The radio electromagnetic wave causes biological electromagnetic effect, and has adverse effect to human health to some degree.

Another type of wireless communication is wireless laser communication. It has the following disadvantages.

1. Due to the transmission characteristics of atmosphere (absorption, reflection, scattering, flashing, etc.), especially the affect of background radiation, usually any laser beam in the visible light wave band should not be used;

2. As for in indoor applications, the adverse effect of a laser to safety of human body, mainly injury to eyes, must be taken into consideration. Table 1 provides a safety standard for point laser in view of total emission power, It is difficult to determine an ideal estimated power value of laser in an indoor application environment;

3. Wireless laser communication needs complex technologies and high cost.

**Table 1**

| Classes | 650nm (visible) | 880nm (infrared) | 1310nm (infrared) | 1550nm (infrared) |
|---|---|---|---|---|
| Class 1 | ∼0.2mW | ∼0.5mW | ∼8.8mW | ∼10mW |
| Class 2 | 0.2∼1mW | - | - | - |
| Class 3A | 1∼5mW | 0.5∼2.5mW | 8.8∼45mW | 10-50mW |
| Class 3B | 5∼500mW | 2.5∼500mW | 45∼500mW | 50∼500mW |

Another type of wireless communication is infrared light wireless communication, which mainly involves an infrared light emitting diode (LED) transmitter and an infrared light receiver.

The disadvantage of infrared light wireless communication is: since being in the invisible light wave band, the infrared light cannot be applied as illumination light source.

The light produced by an LED is usually monochromatic light or chromatic light. Though the lamps made of LEDs have advantages such as compact size, reliability, long service life, low voltage, energy saving and pollution-free, etc., they are usually used for instrument indication and seldom used for illumination in daily life. For general illumination, white light sources are required. In addition, though LED lamps can be used for wireless transmission, they are hardly used in such a way in actual production and life, because they emit chromatic light and thereby produce visual pollution.

It is clear that how to utilize illumination light as the bearer for wireless transmission is still a blank field at present.

### Summary of the Invention

In view of this, an object of the present invention is to provide an illumination light wireless communication system. In this system, illumination light may be used as a light source for optical wireless communication and a light source for illumination.

To achieve the above object, technical solutions of the present invention are implemented as follows.

An embodiment of the present invention provides an illumination light wireless communication system. The system is designed for illumination and communication with a remote communication apparatus, and includes an illumination and communication device, an illumination and communication terminal, and a communication terminal.

The illumination and communication device is adapted to receive a source signal from the remote communication apparatus, convert the received source signal into an optical signal, and carry out wireless communication by the optical signal. The illumination and communication device is also adapted to receive an optical signal, convert the received optical signal into an electric signal, and transmit the electric signal to the remote communication apparatus. Either or both of the optical signal received by the illumination and communication device and the optical signal transmitted by the illumination and communication device are illumination lights.

The illumination and communication terminal is adapted to convert the received optical signal into an electric signal and transmit the electric signal to the communication terminal. The illumination and communication terminal is also adapted to convert an electric signal from the communication terminal to be transmitted into an optical signal and then transmit the optical signal to the illumination and communication device.

The communication terminal is adapted to receive an electric signal from the illumination and communication terminal, and process the electric signal, or send a processed electric signal to the illumination and communication terminal.

Preferably, the illumination and communication device includes an optical transmitter, an optical receiver, an interface receiving unit and an interface transmitting unit.

The interface receiving unit is adapted to receive a source signal from the remote communication apparatus, convert the source signal into a signal that is identifiable to the optical transmitter, and transmit the signal to the optical transmitter.

The optical transmitter is adapted to convert the received signal into an optical signal, and carry out wireless transmission by the optical signal.

The optical receiver is adapted to receive an optical signal from the illumination and communication terminal, convert the received optical signal into an electric signal, and transmit the electric signal to the interface transmitting unit.

The interface transmitting unit is adapted to transmit the received signal to the remote communication apparatus.

Preferably, the illumination and communication terminal includes an optical transmitter, an electric demodulator, an electric modulator and an optical receiver.

The optical receiver is adapted to convert a received optical signal into an electric signal and transmit the electric signal to the electric demodulator.

The electric demodulator is adapted to demodulate the received signal and transmit the signal to the communication terminal.

The electric modulator is adapted to modulate a signal from the communication terminal and transmit the signal to the optical transmitter.

The optical transmitter is adapted to convert the signal received from the electric modulator into an optical signal and carry out wireless transmission by the optical signal.

Preferably, the illumination and communication device includes an optical transmitter, an optical receiver, an interface receiving unit, an interface transmitting unit, an electric modulator and an electric demodulator.

The interface receiving unit is adapted to receive a source signal from the remote communication apparatus, convert the signal into a signal that is identifiable to the electric demodulator, and transmit the signal to the electric demodulator.

The electric demodulator is adapted to demodulate the received signal and transmit the signal to the optical transmitter.

The optical transmitter is adapted to convert the received signal into an optical signal, and carry out wireless transmission by the optical signal.

The optical receiver is adapted to receive an optical signal from the illumination and communication terminal, convert the received optical signal into an electric signal, and transmit the electric signal to the electric modulator.

The electric modulator is adapted to modulate the received signal and transmit the signal to the interface transmitting unit.

The interface transmitting unit is adapted to transmit the received signal to the remote communication apparatus.

Preferably, the illumination and communication terminal includes an optical transmitter and an electric demodulator.

The optical receiver is adapted to convert the received optical signal into an electric signal and transmit the electric signal to the communication terminal.

The optical transmitter is adapted to convert the signal received from the communication terminal into an optical signal and carry out wireless transmission by the optical signal.

Preferably, the optical transmitter is a light emitting diode (LED) or light emitting diode array-based optical transmitter.

Preferably, the light emitting diode or light emitting diode array-based optical transmitter includes at least a drive circuit and a light emitting diode or light emitting diode array.

The drive circuit is adapted to drive the signal and provide a direct current bias for the light emitting diode or light emitting diode array.

The light emitting diode or light emitting diode array is adapted to modulate light intensity according to the input signal and carry out wireless transmission by the optical signal.

Preferably, the light emitting diode or light emitting diode array-based optical transmitter further includes a filter. The filter is adapted to filter out an out-band noise and transmit the filtered signal to the drive circuit.

Preferably, the light emitting diode or light emitting diode array is an infrared light emitting diode or light emitting diode array, or an illumination light emitting diode or diode array.

If the light emitting diode or light emitting diode array is an illumination light emitting diode or diode array, the light emitting diode or light emitting diode array is also used for illumination.

Preferably, the optical receiver includes a drive circuit, an optical detector and a filter.

The drive circuit is adapted to drive the optical detector and provide a direct current bias for the optical detector. The optical detector is driven by the drive circuit to receive an optical signal, convert the received optical signal into an electric signal and transmit the electric signal to the filter. The filter is adapted to filter off out-band noise and transmit the filtered signal to the electric demodulator.

The optical detector is an infrared light detector or illumination light detector.

Preferably, the optical detector is a photosensitive diode or a solar panel.

If the optical signal is illumination light, the photosensitive diode is an illumination light sensitive diode.

If the optical signal is infrared light, the photosensitive diode is an infrared light sensitive diode.

Preferably, the interface receiving unit is a wired interface receiving unit and the interface transmitting unit is a wired interface transmitting unit. Alternatively, the interface receiving unit is a wireless interface receiving unit and the interface transmitting unit is a wireless interface transmitting unit.

Preferably, the electric modulator is an orthogonal frequency division multiplexing-based electric modulator, a spread spectrum-based electric modulator, or an Ethernet physical layer-based electric modulator.

The electric demodulator is an orthogonal frequency division multiplexing-based electric demodulator, a spread spectrum-based electric demodulator, or an Ethernet physical layer-based electric demodulator.

Preferably, the orthogonal frequency division multiplexing-based electric modulator includes a channel encoding unit, a symbol mapping unit and an orthogonal frequency division multiplexing-based modulator. The channel encoding unit is adapted to receive a signal to be transmitted and perform channel encoding on the signal. The symbol mapping unit is adapted to perform symbol mapping on the channel-coded signal with a constellation diagram for digital modulation. The orthogonal frequency division multiplexing-based modulator is adapted to perform orthogonal frequency division multiplexing modulation on symbol-mapped symbols.

The orthogonal frequency division multiplexing-based electric demodulator includes a channel decoding unit, a symbol demapping unit and an orthogonal frequency division multiplexing-based demodulator. The orthogonal frequency division multiplexing-based demodulator is adapted to perform orthogonal frequency division multiplexing demodulation on the received signal. The symbol demapping unit is adapted to perform symbol demapping on the orthogonal frequency division multiplexing-demodulated signal with a constellation diagram for digital modulation. The channel decoding unit is adapted to perform channel decoding on the received signal.

Preferably, the orthogonal frequency division multiplexing-based electric modulator is an electric x Digital Subscriber Line modulator, an electric Cable modulator, or an electric power line communication modulator.

The orthogonal frequency division multiplexing-based electric demodulator is an electric x Digital Subscriber Line demodulator, an electric Cable demodulator, or an electric power line communication demodulator.

Preferably, the spread spectrum-based electric modulator and electric demodulator are direct sequence spread spectrum-based electric modulator and electric demodulator, frequency hopping-based electric modulator and electric demodulator, time hopping-based electric modulator and electric demodulator, or chirp-based electric modulator and electric demodulator.

Preferably, if the interface receiving unit is a wired interface receiving unit and the interface transmitting unit is a wired interface transmitting unit, the illumination and communication device is connected to the remote communication apparatus directly through a wired cable, and the wired cable is a telephone cable, a cable television cable, an Ethernet cable or a power cable.

Preferably, the illumination and communication terminal is located in or outside the communication terminal.

If the illumination and communication terminal is located outside the communication terminal, one illumination and communication terminal communicates with one or more communication terminals through wired or wireless transmission.

Preferably, the communication terminal is a computer, a mobile telephone, a fax machine, a fixed telephone, a PDA or a network television.

With the illumination light wireless communication system provided in the present invention, the light emitted from an illumination and communication device and/or illumination and communication terminal can be used as a light source for optical wireless communication and a light source for illumination. Therefore, the object of utilizing illumination light as both the light source for optical wireless communication and the light source for illumination is achieved, and the traditional prejudice that illumination light cannot be used as a bearer for wireless communication is overcome. Furthermore, compared with the existing wireless communication approaches, the illumination light wireless communication system provided in the present invention has the following advantages.

Compared with the existing radio wave communication, the illumination light wireless communication system has the following advantages:

1. In the inventive illumination light wireless communication system, there is no radio electromagnet interference, the spectrum is not under the control of the government, and no electromagnet interference will be brought to electronic instruments;

2. There are a wide spectrum and high bandwidth available in the inventive illumination light wireless communication system;

3. The illumination light is generally unable to penetrate walls, and therefore a high security performance may be ensured; and

4. The inventive illumination light wireless communication system does not cause biologic electromagnetic effect.

Compared with the existing laser wireless communication, the illumination light wireless communication system has the following advantages:

1. The illumination light LED for producing illumination light is a wide-angle emitter; since it is not a point light source, the image area on the retina is relatively large and the energy is dispersed; therefore, the illumination light wireless transmission system is safer even in the case of high power output;

2. The output energy may be increased to the level of indoor illumination simply by forming a LED array with a plurality of illumination light LEDs;

3. Since the illumination light LED is safe to human eyes, it can be used for indoor optical communication; the technology is simple and low in cost, because an indoor operating environment is much more stable than an outdoor operating environment and no device is needed to deal with severe weather conditions or background radiation.

Compared with the existing infrared light wireless communication, the illumination light wireless communication system has the following advantages: with the illumination light LED technology, the visible light (i.e., illumination light) can transmit data by means of flashing at a rate unperceivable to human eyes; therefore, the existing illumination light facilities can be used with minor modifications, for example, by replacing an incandescent lamp light source with an illumination light LED, so as to meet the demand for both optical wireless communication and illumination. In addition, no optical pollution will be caused.

Furthermore, if the electric modem employs the OFDM technology, multi-path interference and time delay spread between optical wireless channel and wired cable channel may be avoided effectively, and the modulation speed of the illumination light LEDs may be improved.

Moreover, the optical detector provided in the present invention may be implemented with a solar panel. In this way, an information-modulated visible light signal (i.e., illumination light signal) can be converted into an electric signal, and the illumination light can be utilized to supply power to the apparatus where the solar panel is located.

With the above features, the present invention is applicable to both indoor environments and outdoor environments.

### Brief Description of the Drawings

Figure 1 is a schematic diagram illustrating the structure of an illumination light wireless communication system according to an embodiment of the present invention;

Figure 2a is a structure functional block diagram illustrating an illumination light wireless communication system according to embodiment 1 of the present invention;

Figure 2b is a structure functional block diagram illustrating an illumination light wireless communication system according to embodiment 2 of the present invention;

Figure 2c is a structure functional block diagram illustrating an illumination light wireless communication system according to embodiment 3 of the present invention;

Figure 2d is a structure functional block diagram illustrating an illumination light wireless communication system according to embodiment 4 of the present invention;

Figure 3 is a principle functional block diagram illustrating an optical transmitter;

Figure 4 shows an exemplary drive circuit for illumination light LED;

Figure 5 is a principle functional block diagram illustrating an optical receiver;

Figure 6 is a principle functional block diagram illustrating an OFDM-based electric modulator;

Figure 7 is a principle functional block diagram illustrating an OFDM-bassd electric demodulator;

Figure 8 is a principle functional block diagram illustrating the OFDM-based electric modulator shown in Figure 6;

Figure 9 is a principle functional block diagram illustrating the OFDM-based electric demodulator shown in Figure 7;

Figure 10 is a principle functional block diagram illustrating a direct sequence spread spectrum (DS)-based electric modulator;

Figure 11 is a principle functional block diagram illustrating a DS-based electric demodulator;

Figure 12 is a principle functional block diagram illustrating a frequency hopping (FH)-based electric modulator; and

Figure 13 is a principle functional block diagram illustrating an FH-based electric demodulator.

### Detailed Description of the Embodiments

Hereunder the present invention is further illustrated with reference to the embodiments in conjunction with the accompanying drawings.

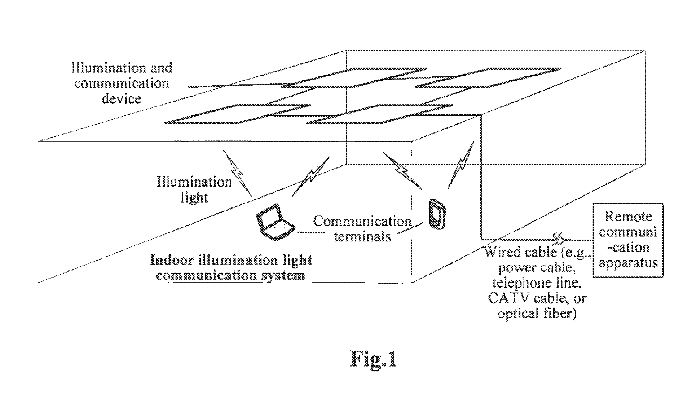

Figure 1 is a schematic diagram illustrating the structure of an illumination light wireless communication system according to an embodiment of the present invention. An illumination and communication device receives a source signal from a remote communication apparatus, and communicates with communication terminals wirelessly by means of light. Since the light transmitted/received by the illumination and communication device is illumination light, the illumination and communication device can serve as a light source for the wireless communication and also be used for illumination.

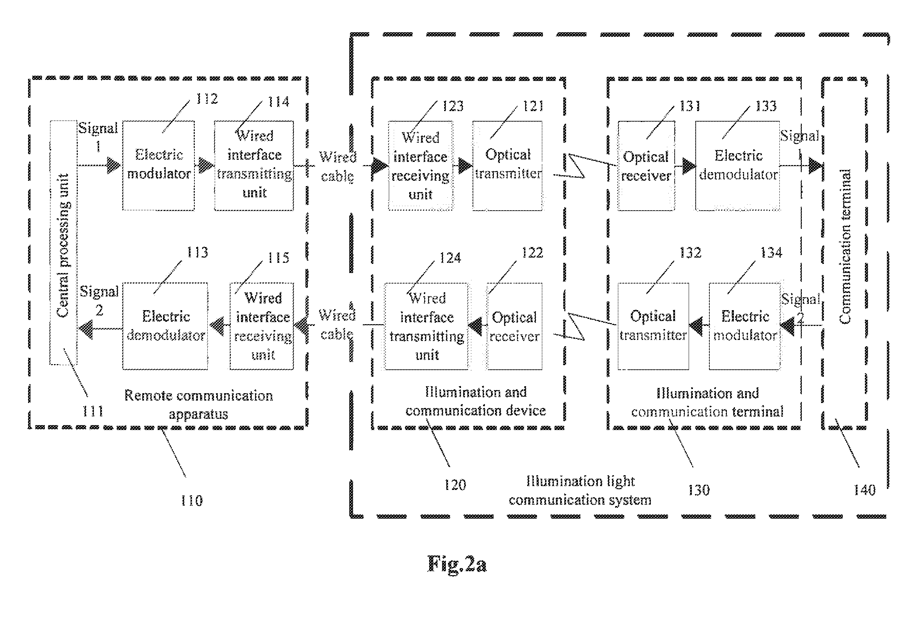

Figure 2a is a structure functional block diagram illustrating an illumination light wireless communication system according to embodiment 1 of the present invention. As shown in Figure 1 and Figure 2a, the illumination light wireless communication system is used for illumination and communication with a remote communication apparatus 110. The system includes an illumination and communication device 120, an illumination and communication terminal 130 and a communication terminal 140. The illumination and communication device 120 is adapted to receive a source signal from the remote communication apparatus 110 through a wired cable, convert the received source signal into an optical signal, and carry out wireless transmission by the optical signal. The illumination and communication device 120 is also adapted to receive an optical signal, convert the received optical signal into an electric signal, and transmit the electric signal to the remote communication apparatus 110 through a wired cable. In addition, either or both the optical signals received/transmitted by the illumination and communication device 120 are illumination lights, which flash at a rate unperceivable to human eyes. The illumination and communication terminal 130 is adapted to convert the received optical signal into an electric signal and transmit the electric signal to the communication terminal 140. The illumination and communication terminal 130 is also adapted to convert an electric signal from the communication terminal 140 into an optical signal and then transmit the optical signal to the illumination and communication device 120 wirelessly. The communication terminal 140 is adapted to receive the electric signal from the illumination and communication terminal 130, process the electric signal as appropriate, or transmit the processed electric signal to the illumination and communication terminal 130. In this way, the light from the illumination and communication device 120 can be used as a light source for wireless communication and a light source for illumination.

In other words, if the direction from the illumination and communication device 120 to the communication terminal 140 is defined as a downlink direction and the direction from the communication terminal 140 to the illumination and communication device 120 is defined as an uplink direction, at least one of the downlink and uplink lines employs illumination light to carry out wireless transmission. It is also possible that both of the downlink and uplink lines employ illumination light to carry out wireless transmission. In this way, the light emitted from or received by the illumination and communication device 120 can be used as a light source for wireless communication and a light source for illumination. The illumination and communication device 120 can utilize the flashing mechanism of outdoor large display screens, illumination facilities, signal lamps and headlights of automobiles equipped with illumination light LEDs to carry out modulation and optical wireless transmission of a source signal. The illumination and communication terminal 130 can utilize an optical sensor such as a photodiode to receive the light and obtain information. White light (i.e., illumination light) can transmit data by flashing at a rate unperceivable to human eyes. Therefore, the existing illumination facilities can be used with minor modifications, for example, by replacing an incandescent lamp light source with an illumination light LED, so as to meet the demand for both optical wireless communication and illumination. Alternatively, the illumination light can transmit data by switching between bright and dark states. The illumination light LED described in the disclosure may be a white light LED or a white LED.

In Figure 1, the illumination and communication terminal 130 is located in the communication terminal 140. the illumination and communication terminal 130 may be located outside the communication terminal 140 so that they are separated from each other. In this case, an illumination and communication terminal 130 can serve one or more communication terminals 140, i.e., one illumination communication terminal 130 can communicate with one or more communication terminals 140 through wired or wireless transmission.

As shown in Figure 2a, the illumination and communication device 120 includes an optical transmitter 121, an optical receiver 122, a wired interface receiving unit 123 and a wired interface transmitting unit 124. The wired interface receiving unit 123 receives a source signal from the remote communication apparatus 110 through a wired cable, converts the source signal into a signal that can be identified by the optical transmitter 121, and then transmits the signal to the optical transmitter 121. The optical transmitter 121 is adapted to convert the received source signal into an optical signal, and carry out wireless transmission by the optical signal. The optical receiver 122 is adapted to receive an optical signal from the illumination and communication terminal 130, convert the received optical signal into an electric signal, and transmit the electric signal to the wired interface transmitting unit 124. The wired interface transmitting unit 124 transmits the received signal to the remote communication apparatus 110 through a wired cable.

As shown in Figure 2a, the illumination and communication terminal 130 includes an optical receiver 131, an optical transmitter 132, an electric demodulator 133 and an electric modulator 134. The optical receiver 131 is adapted to convert a received optical signal into an electric signal and transmit the electric signal to the electric demodulator 133. The electric demodulator 133 is adapted to demodulate the received signal and transmit the demodulated signal to the communication terminal 140. The electric modulator 134 is adapted to modulate a signal from the communication terminal 140 and transmit the modulated signal to the optical transmitter 132. The optical transmitter 132 is adapted to convert the signal received from the electric modulator 134 into an optical signal and carry out wireless transmission with the optical signal.

As shown in Figure 2a, the remote communication apparatus 110 includes a central processing unit 111, an electric modulator 112, an electric demodulator 113, a wired interface transmitting unit 114 and a wired interface receiving unit 115. The central processing unit 111 is adapted to receive or produce a source signal, and transmit the source signal to the electric modulator 112. Alternatively, the central processing unit 111 is adapted to process a signal from the electric demodulator 113. The electric modulator 112 is adapted to modulate the signal from the central processing unit 111 and transmit the modulated signal to the wired interface transmitting unit 114. The wired interface transmitting unit 114 transmits the received signal to the illumination and communication device 120 through a wired cable. The wired interface receiving unit 115 is adapted to receive a signal from the illumination and communication device 120 through a wired cable and transmit the signal to the electric demodulator 113. The electric demodulator 113 demodulates the received signal and transmits the demodulated signal to the central processing unit 111.

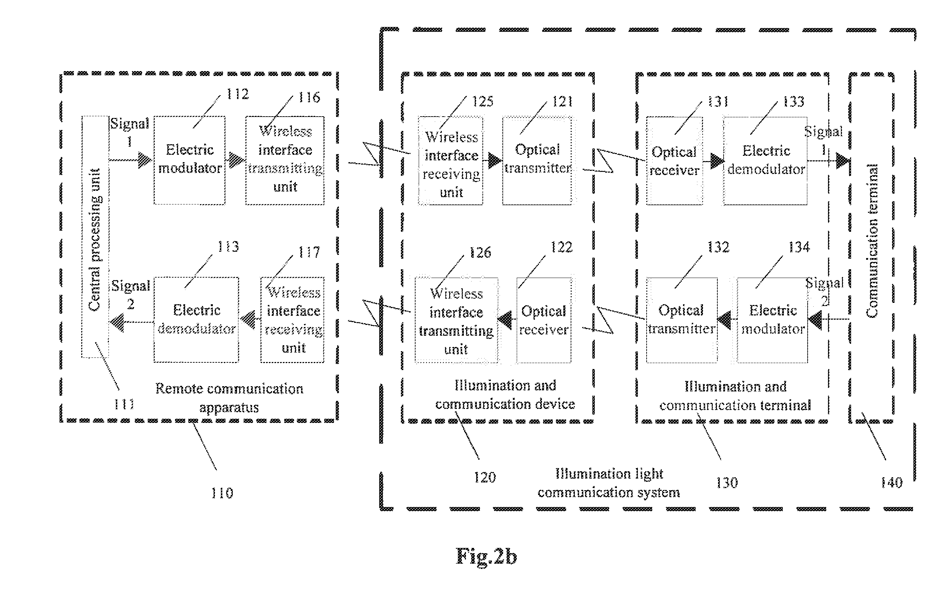

Figure 2b shows a structure functional block diagram of an illumination light wireless communication system according to embodiment 2 of the present invention. The difference between the embodiment shown in Figure 2b and the embodiment shown in Figure 2a lies in that: in Figure 2a, the transmission between the remote communication apparatus 110 and the illumination and communication device 120 is implemented by a wired cable, while in Figure 2b, the transmission between the remote communication apparatus 110 and the illumination and communication device 120 implemented in a wireless way. The rest aspects of the embodiment shown in Figure 2b are identical to those of the embodiment shown in Figure 2a. In other words, if the interface units are classified into interface transmitting units and interface receiving units, then in Figure 2a, the interface transmitting unit and the interface receiving unit are wired interface transmitting unit and wired interface receiving unit respectively, and in Figure 2b, the interface transmitting unit and interface receiving unit are wireless interface transmitting unit and wireless interface receiving unit respectively. The rest aspects of the embodiment shown in Figure 2b are identical to those of the embodiment shown in Figure 2a and will not be described further.

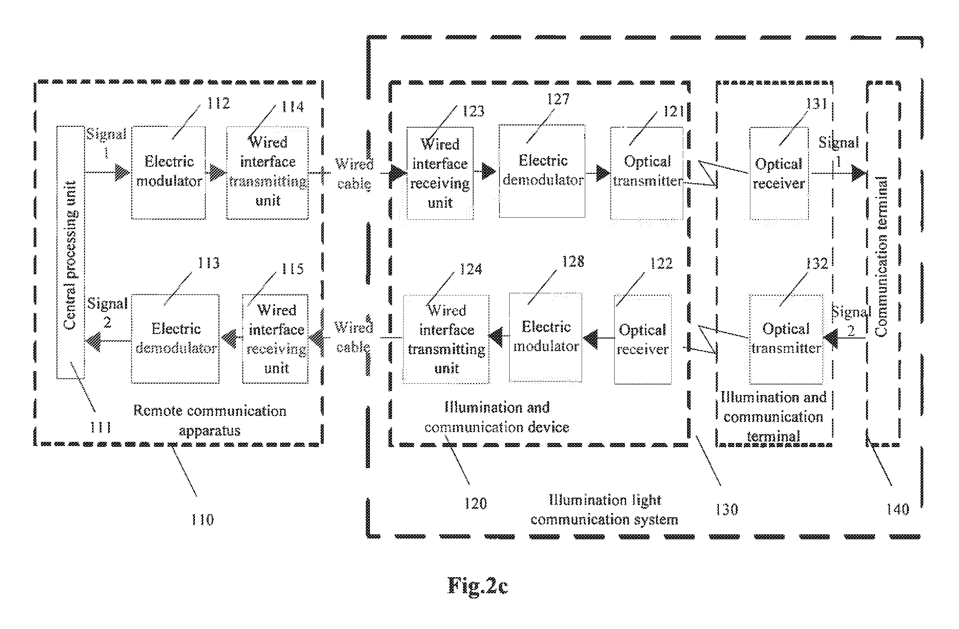

Figure 2c shows a structure functional block diagram of an illumination light wireless communication system according to embodiment 3 of the present invention. The embodiment shown in Figure 2c is different from the embodiment shown in Figure 2a in that: the electric demodulator and the electric modulator in the illumination and communication terminal 130 are moved into the illumination and communication device 120. In this case, the internal structures and operations of the illumination and communication device 120 and illumination and communication terminal 130 are described as follows.

The illumination and communication device 120 includes an optical transmitter 121, an optical receiver 122, a wired interface receiving unit 123, a wired interface transmitting unit 124, an electric modulator 128 and an electric demodulator 127. The wired interface receiving unit 123 is adapted to receive a source signal from the remote communication apparatus 110, convert the received source signal into a signal that can be identified by the electric demodulator 127, and then transmit the signal to the electric demodulator 127. The electric demodulator 127 demodulates the received signal and transmits the demodulated signal to the optical transmitter 121. The optical transmitter 121 converts the received signal into an optical signal and carry out wireless transmission by the optical signal. The optical receiver 122 receives an optical signal from the illumination and communication terminal 130, converts the received optical signal into an electric signal, and transmits the electric signal to the electric modulator 128. The electric modulator 128 modulates the received signal, and transmits the modulated signal to the wired interface transmitting unit 124. The wired interface transmitting unit 124 transmits the received signal to the remote communication apparatus 110,

The illumination and communication terminal 130 includes an optical transmitter 132 and an optical receiver 131. The optical receiver 131 converts the received optical signal into an electric signal and transmits the electric signal to the communication terminal 140. The optical transmitter 132 converts the signal received from the communication terminal 140 into an optical signal and carry out wireless transmission by the optical signal.

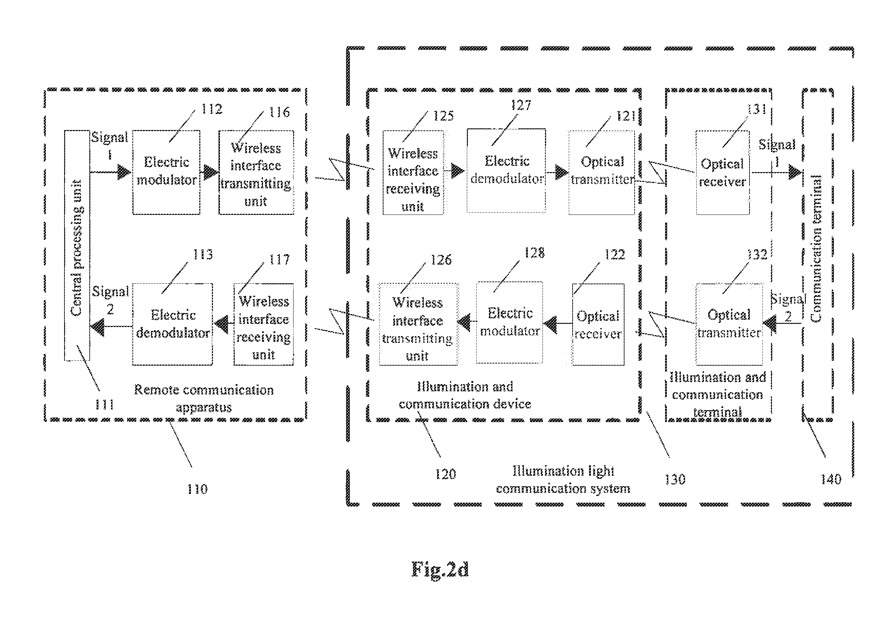

Figure 2d shows a structure functional block diagram of an illumination light wireless communication system according to embodiment 4 of the present invention. The difference between the embodiment shown in Figure 2d and the embodiment shown in Figure 2c lies in that: in Figure 2c, the transmission between the remote communication apparatus 110 and the illumination and communication device 120 is implemented by a wired cable, while in Figure 2d, the transmission between the remote communication apparatus 110 and the illumination and communication device 120 is implemented in a wireless way. The rest aspects of the embodiment shown in Figure 2d are identical to those of the embodiment shown in Figure 2c. In other words, in Figure 2c, the interface transmitting unit and interface receiving unit are wired interface transmitting unit and wired interface receiving unit respectively, while in Figure 2d, the interface transmitting unit and interface receiving unit are wireless interface transmitting unit and wireless interface receiving unit respectively.

The wired interface receiving units described above each mainly includes an impedance matching circuit and a preamplifier. The impedance matching circuit is adapted to provide impedance transformation and adaptation between the internal communication units and the wired cable. The preamplifier is adapted to perform pre-amplification on a signal. The wireless interface receiving units described above each mainly includes a receiving antenna and a wireless receiver, and is adapted to perform a receiving processing on a wireless signal, such as low-noise amplification and down-conversion.

Similarly, the wired interface transmitting units described above each mainly includes an impedance matching circuit and a power amplifier. The impedance matching circuit is adapted to provide impedance transformation and adaptation between the internal communication units and the wired cable. The power amplifier is adapted to perform power amplification on the signal. The wireless interface transmitting units described above each mainly includes a transmitting antenna and a wireless transmitter, and is adapted to perform transmitting up-conversion and power amplification on a wireless signal.

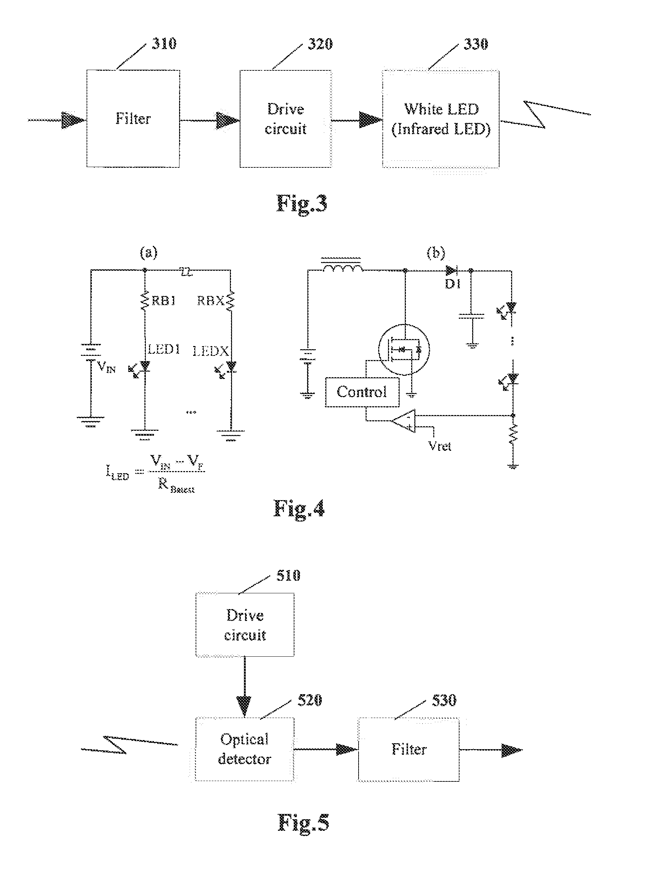

All the optical transmitters in figures 2a to 2d are actually identical to each other, and are LED- or LED array-based optical transmitters. As shown in Figure 3, the optical transmitter includes a filter 310, a drive circuit 320 and a white LED or LED array 330. The filter 310 is adapted to filter out out-signal noise. The drive circuit 320 is adapted to receive the output signal from the filter, produce a forward current pass-through component, and provide direct current (DC) bias to the white LED or LED array 330. The white LED or LED array 330 is adapted to perform light intensity modulation according to the input signal, and carry out wireless transmission by an optical signal, It is also possible that the optical transmitter does not include the filter 310. However, in this case, interference will exist and the effect will not be ideal.

If the optical wireless communication system employs a frequency division duplex (FDD) mode, one of the optical transmitters of the illumination and communication terminal and the illumination and communication device in the embodiments of the present invention can be an illumination light transmitter, and the other can be an infrared light transmitter. If the optical wireless communication system employs a time division duplex (TDD) mode, both the optical transmitter of the illumination and communication terminal and the optical transmitter of the illumination and communication device in the embodiments of the present invention may be illumination light transmitters, or one of them is an illumination light transmitter and the other is an infrared light transmitter. The difference between the infrared light transmitter and the illumination light transmitter mainly lies in the LEDs as they employ. The infrared light transmitter employs an infrared LED, while the illumination light transmitter employs an illumination light LED or illumination light LED array. In other words, the illumination light LED or illumination light LED array is used not only to transmit data by light but also for illumination.

The visible light transmitted from the illumination light LED or illumination light LED array has a wavelength within a range of 380nm to 780nm. The input modulation signal enables direct light intensity modulation by causing a variation in the turn-on current of the illumination light LED.

The main object of the drive circuit of the illumination light LED or illumination light LED array is to produce a forward current pass-through component, which can be implemented with a constant voltage source or a constant current source.

Figure 4(a) show a solution with the lowest cost. In the solution, an illumination light LED is connected to a ballasting resistor (RB) in series, and a constant voltage source is applied at the two ends of the circuit. The ballasting resistor will limit the current that passes it through, and the nonlinear V-I curve of the illumination light LED will cause poor current regulation performance of the solution. In addition, the current through the illumination light LED varies with the external voltage or the forward voltage (VF) applied on the illumination light LED. As a result, the extreme changing of the current through the illumination light LED will affect brightness of the display, which is intolerable in many applications.

Figure 4(b) shows a relatively ideal solution, which is implemented with a constant current source. Specifically, the voltage between the two ends of a current sensing resistor is regulated directly. In this case, the current through the illumination light LED depends on the reference voltage from a power supply unit and the resistance of the current sensing resistor. Most displays require a plurality of illumination light LEDs. In order to drive a plurality of illumination light LEDs flexibly, the illumination light LEDs need to be connected in series, so as to ensure the currents through all illumination light LEDs have values equal to each other. If the illumination light LEDs are to be driven in parallel, each illumination light LED needs to be connected to a ballasting resistor in series, so as to avoid any difference between the values of the currents through the illumination light LEDs. However, those resistors will consume power and degrade circuit efficiency. That approach can avoid current fluctuations resulted from variations of the forward voltage on the illumination light LED. As long as controllable and constant forward current is employed, controllable and constant display brightness can be achieved. It is very easy to produce a constant current source, and the controller needs not to control power supply to output a stable voltage.

Figure 4(a) and Figure 4(b) show two embodiments of the present invention. In actual applications, other implementations are possible. However, no matter what the implementation is, the solutions are essentially implemented with a constant voltage source or constant current source.

All the optical receivers shown in figures 2a to 2d are actually identical to each other. As shown in Figure 5, the optical receiver includes a drive circuit 510, an optical detector 520 and a filter 530. Driven by the drive circuit 510, the optical detector 520 is adapted to receive optical signal, convert the received optical signal into electric signal, and transmit the electric signal to the filter 530. The filter 530 is adapted to filter out out-signal noise, and transmit the filtered signal to the electric demodulator. It is also possible that the optical receiver does not include the filter 530. However, in this case, interference will exist and the effect will not be ideal.

Likewise, if the optical wireless communication system employs an FDD mode, one of the optical receiver of the illumination and communication terminal and the optical receiver of the illumination and communication device is an illumination light receiver, and the other is an infrared light receiver. If the optical wireless communication system employs a TDD mode, both of the optical receiver in the illumination and communication terminal and that in the illumination and communication device may be illumination light receivers, or one of them is an illumination light receiver and the other is an infrared light receiver. The difference between the infrared light receiver and the illumination light receiver mainly lies in the photosensitive diodes as they employ. The infrared light receiver employs an infrared light sensitive diode, while the illumination light receiver employs an illumination light sensitive diode. The illumination light sensitive diode is also referred to as a white light sensitive diode.

The white light sensitive diode converts an information-modulated visible light signal (i.e., illumination light signal) having a wavelength within a range of 380nm to 780nm into an electric signal by using a Direct Detection technology. It is equivalent to a cymoscope in electric communication systems.

In addition, the optical detector may also be implemented with a solar panel. The solar panel can not only convert the information-modulated visible light signal (i.e., a signal having a wavelength within a range of 380nm to 780nm in the present invention) into an electric signal, but also utilize the energy of the visible light (i.e., energy of illumination light) to supply power to the apparatus where it is located.

It should be noted that in unlink and downlink transmission, at least one line needs to employ an illumination light transmitter, so as to implement an illumination function while transmitting data. In other words, at least one of the optical transmitter 121 and the optical transmitter 132 is an illumination light transmitter. Accordingly, the optical receiver 122 and the optical receiver 131 need to match the optical transmitter 121 and the optical transmitter 132.

All electric modulators and electric demodulators in figures 2a to 2d are actually identical to each other, and may be Orthogonal Frequency Division Multiplexing (OFDM)-based electric modulators and electric demodulators, spread spectrum-based electric modulators and electric demodulators, or Ethernet physical layer-based electric modulators and electric demodulators. In practice, the electric modulators and electric demodulators are not limited to the above described ones which are only some embodiments.

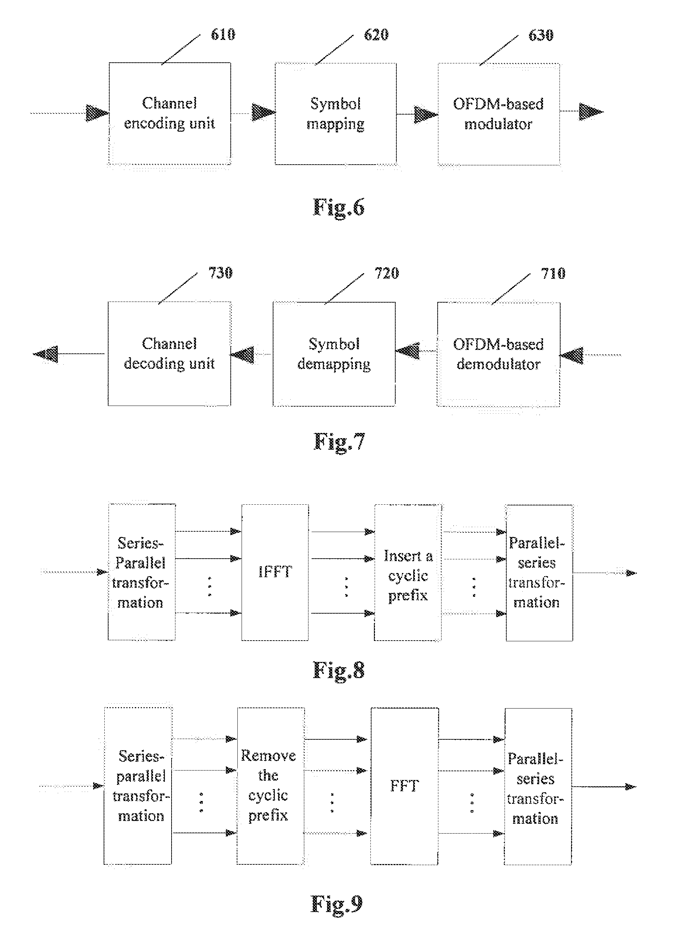

Figure 6 and Figure 7 show principle functional block diagrams of OFDM-based electric modulator and electric demodulator respectively.

As shown in Figure 6, the OFDM-based electric modulator includes a channel encoding unit 610, a symbol mapping unit 620 and an OFDM-based modulator 630. The channel encoding unit 610 is adapted to receive a signal to be transmitted, and perform channel encoding on the signal. Then, the symbol mapping unit 620 performs symbol mapping on the channel-encoded signal with a constellation diagram for digital modulation. The OFDM-based modulator 630 is adapted to perform OFDM modulation on the symbol-mapped signal.

As shown in Figure 7, the OFDM-based electric demodulator includes a channel decoding unit 730, a symbol demapping unit 720 and an OFDM-based demodulator 710. The OFDM-based demodulator 710 is adapted to perform OFDM demodulation on the received signal. The symbol demapping unit 720 is adapted to perform symbol demapping on the OFDM-demodulated signal with a constellation diagram for digital modulation. The channel decoding unit 730 is adapted to perform channel decoding on the received signal.

If the illumination and communication device 120 is connected to the remote communication apparatus 110 through a wired cable and employs an OFDM-based electric modulator and an OFDM-based electric demodulator, the electric modulator and the electric demodulator may be an electric x Digital Subscriber Line (xDSL) modulator and an electric xDSL demodulator if the wired cable is a telephone cable, an electric Cable modulator and an electric Cable demodulator if the wired cable is a Cable Television (CATV) cable, or an electric Power Line Communication (PLC) modulator and an electric PLC demodulator if the wired cable is a power cable. Employing the OFDM-based electric modulator and electric demodulator has advantages as follows: (1) utilization ratio of spectrum is high and theoretically up to the limit specified in the Shannon Information Theory; (2) inter-symbol interference (ISI) may be overcome affectively; (3) channel fading may be resisted effectively: specifically, OFDM technology divides a frequency-selective fading channel into a plurality of parallel and correlated flat fading channels, and therefore, the requirement for system performance can be met by utilizing a simple channel equalization technology instead of a complex adaptive equalization technology; (4) noise interference may be resisted: the resistance of OFDM to channel noise interference is implemented by allocation of sub-channels; (5) it is suitable for high speed data transmission. Therefore, employing the OFDM-based electric modulator and electric demodulator can resist multi-pass interference, avoid time delay spreading of optical wireless channels and cable channels, and improve modulation rate of the illumination light LED.

If the illumination and communication device 120 is connected to the remote communication apparatus 110 through a wired cable and employs a spread spectrum-based electric modulator and a spread spectrum-based electric demodulator, the electric modulator and electric demodulator in the remote communication apparatus may be an Direct Sequence Spread Spectrum (DS)-based electric modulator and an DS-based electric demodulator, a Frequency Hopping (FH)-based electric modulator and an FH-based electric demodulator, or a Time Hopping (TH) or Chirp-based electric modulator and a TH or Chirp-based electric demodulator. Employing the DS-based electric modulator and electric demodulator has advantages of (1) having low spectrum density and small electromagnet interference to other systems; (2) having high anti-interference performance and low error rate; (3) having high information security; (4) supporting Code Division Multiple Access (CDMA).

Hereunder the OFDM-based electric modulator and electric demodulator are described in brief.

Figure 8 is a principle functional block diagram of the OFDM-bascd modulator shown in Figure 6. After the binary information of communication data is processed through channel encoding, the communication data is processed through digital modulation and then series-parallel transformation (or series-parallel transformation and then digital modulation) so as to be converted into a data sequence {*X*(*k*)} to be transmitted on M channels in parallel, where *k* = 0,1,...*N* - 1 and N is the number of sub-carriers. Then, the data sequences are transformed by an Inverse Fast Fourier Transform (IFFT) unit into a time domain sequence {*x*(*n*)}, where *n* = 0,1,...*N* - 1. The time domain sequence is then prefixed with a Cyclic Prefix (CP), converted through parallel-series transformation, and then transmitted to a power amplifier.

Figure 9 is a principle functional block diagram of the OFDM-based demodulator shown in Figure 7. After being amplified by a preamplifier receiving a signal, the signal is processed through Cyclic Prefix (CP) removing and series-parallel transformation. At that time, the signal is denoted as {*y*(*n*)}, where *n* = 0,1,...*N* - 1 and N is the number of sub-carriers. The signal is then processed through Fast Fourier Transform (FFT) to obtain a frequency domain signal {*Y*(*k*)}, where *k* = 0,1,...*N* - 1. Then the signal is processed through digital demodulation, parallel-series transformation (or parallel-series transformation and then digital demodulation), and then through channel decoding to obtain the binary information of communication data.

Hereunder the spread spectrum-based electric modulator and electric demodulator are described in brief.

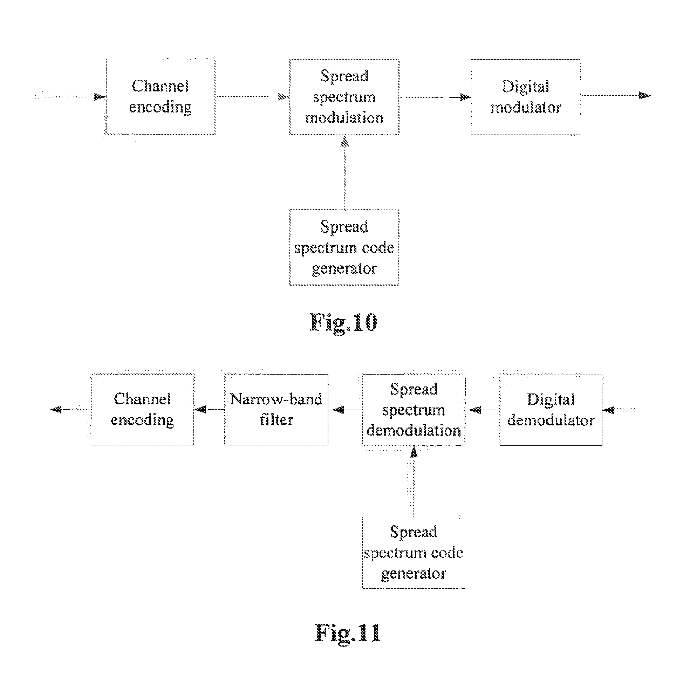

Figure 10 and Figure 11 show principle functional block diagrams of DS-based electric modulator and electric demodulator.

As shown in Figure 10, in the DS-based modulator (in that mode, the spectrum spreading is achieved directly by modulation of a high code-rate spread spectrum code sequence), binary information carrying a coexistence negotiation signaling from the transmitting end is processed through channel encoding, demodulated with a spread spectrum code sequence generated by a spread spectrum code generator to spread the spectrum of the signal, and then modulated and transmitted by a digital modulator. The spread spectrum code sequence can be a Pseudo-Noise (PN) code sequence which has excellent self-correlation and inter-correlation properties.

As shown in Figure 11, in the DS-based demodulator, a broadband information signal containing noise is received at the receiving end. The received signal is processed through digital demodulation and then through spread spectrum demodulation with a spread spectrum code sequence that is produced locally and identical to the spread spectrum code sequence at the transmitting end. Then the signal is filtered by a narrow-band filter and processed through channel decoding so that the binary information carrying the coexistence negotiation signaling is recovered.

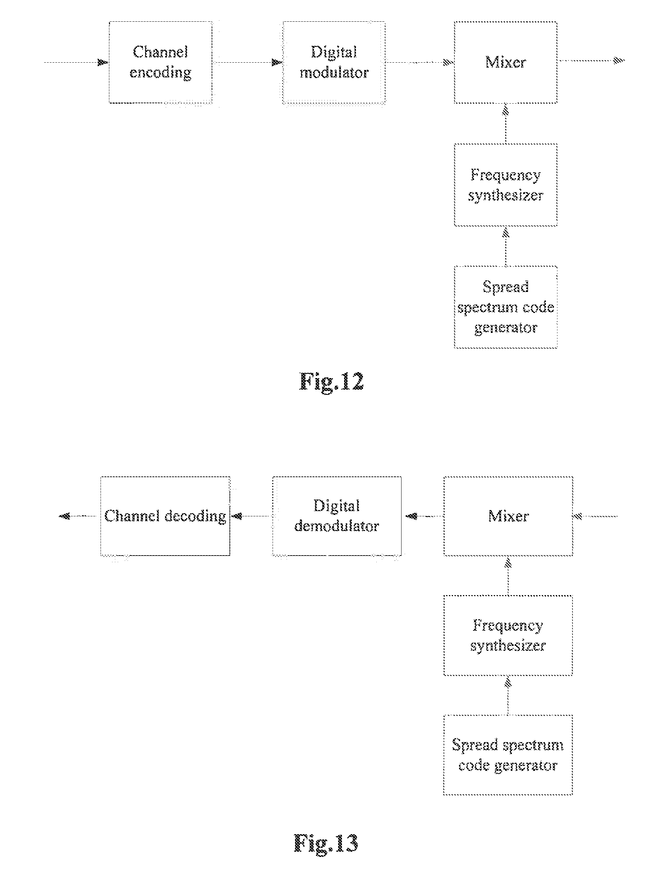

Figure 12 and Figure 13 show principle functional block diagrams of FH-based electric modulator and electric demodulator.

As shown in Figure 12, in the FH-based modulator, binary information carrying coexistence negotiation signaling from the transmitting end is processed through channel encoding, modulated by a digital modulator, and is mixed by the digital modulator with the frequency which is output from a frequency synthesizer under the control of a spread spectrum code sequence generated by a spread spectrum code generator, so as to spread the spectrum of the signal. Then the signal is transmitted. The spread spectrum code sequence can be a Pseudo-Noise (PN) code sequence which has excellent self-correlation and inter-correlation properties.

As shown in Figure 13, in the FH-based electric demodulator, a broadband information signal containing noise is received at the receiving end. The received signal is processed through digital demodulation, and then mixed with a frequency which is output from a frequency synthesizer under the control of a spread spectrum code sequence generated locally and identical to the spread spectrum code sequence at the transmitting end. Then the signal is processed through digital demodulation and channel decoding so that the binary information carrying the coexistence negotiation signaling is recovered.

The communication terminal described above includes, but is not limited to, computer, mobile telephone, fax machine, telephone, PDA, and network television. The remote communication apparatus includes, but is not limited to, computer, mobile telephone, fax machine, telephone, PDA, and network television. The remote communication apparatus and the communication terminal may be identical to or different from each other.

It can be seen from the above solutions that besides home use, the present invention is also especially applicable to the following application scenarios: locations with strong electromagnet interference; locations where cabling is difficult, such as monumental ancient buildings, high-risk plants and workshops; locations where cabling will cost highly or be difficult or is difficult to be approved by a municipal department, such as a space between buildings along a street road; some temporary locations, such as an exhibition hall or a business office leased for a short term; locations where mobility is provided, such as a business hall where portable computers are used. It is obvious that the present invention is applicable to both indoor and outdoor environments.

It should be noted that while the present invention has been illustrated and described with reference to some exemplary embodiments, various variations and modifications can be made by those skilled in the art without departing from the principle of the present invention. These variations and modifications fall into the scope of the present invention.

## Claims

1. An illumination light wireless communication system, adapted for illumination and communication with a remote communication apparatus, comprising:
an illumination and communication device, adapted to receive a source signal from the remote communication apparatus, convert the received source signal into an optical signal, and carry out wireless communication by the optical signal; the illumination and communication device is further adapted to receive an optical signal, convert the received optical signal into an electric signal, and transmit the electric signal to the remote communication apparatus; wherein either or both of the optical signal received by the illumination and communication device and the optical signal transmitted by the illumination and communication device are illumination lights;
an illumination and communication terminal, adapted to convert the received optical signal into an electric signal and transmit the electric signal to a communication terminal; the illumination and communication terminal is also adapted to convert an electric signal from the communication terminal to be transmitted into an optical signal and then transmit the optical signal to the illumination and communication device; and
a communication terminal, adapted to receive an electric signal from the illumination and communication terminal, and process the electric signal, or send a processed electric signal to the illumination and communication terminal.

2. The system according to claim 1, wherein the illumination and communication device comprises: an optical transmitter, an optical receiver an interface receiving unit and an interface transmitting unit, wherein
the interface receiving unit is adapted to receive a source signal from the remote communication apparatus, convert the source signal into a signal that is identifiable to the optical transmitter, and transmit the signal to the optical transmitter;
the optical transmitter is adapted to convert the received signal into an optical signal, and carry out wireless transmission by the optical signal;
the optical receiver is adapted to receive an optical signal from the illumination and communication terminal, convert the received optical signal into an electric signal, and transmit the electric signal to the interface transmitting unit; and
the interface transmitting unit is adapted to transmit the received signal to the remote communication apparatus.

3. The system according to claim 2, wherein the illumination and communication terminal comprises an optical transmitter, an electric demodulator, an electric modulator and an optical receiver, wherein
the optical receiver is adapted to convert a received optical signal into an electric signal and transmit the electric signal to the electric demodulator;
the electric demodulator is adapted to demodulate the received signal and transmit the signal to the communication terminal;
the electric modulator is adapted to modulate a signal from the communication terminal and transmit the signal to the optical transmitter; and
the optical transmitter is adapted to convert the signal received from the electric modulator into an optical signal and carry out wireless transmission by the optical signal.

4. The system according to claim 1, wherein the illumination and communication device comprises an optical transmitter, an optical receiver, an interface receiving unit, an interface transmitting unit, an electric modulator and an electric demodulator, wherein
the interface receiving unit is adapted to receive a source signal from the remote communication apparatus, convert the signal into a signal that is identifiable to the electric demodulator, and transmit the signal to the electric demodulator;
the electric demodulator is adapted to demodulate the received signal and transmit the signal to the optical transmitter;
the optical transmitter is adapted to convert the received signal into an optical signal, and carry out wireless transmission by the optical signal;
the optical receiver is adapted to receive an optical signal from the illumination and communication terminal, convert the received optical signal into an electric signal, and transmit the electric signal to the electric modulator;
the electric modulator is adapted to modulate the received signal and transmit the signal to the interface transmitting unit; and
the interface transmitting unit is adapted to transmit the received signal to the remote communication apparatus.

5. The system according to claim 4, wherein the illumination and communication terminal comprises an optical transmitter and an electric demodulator, wherein
the optical receiver is adapted to convert the received optical signal into an electric signal and transmit the electric signal to the communication terminal; and
the optical transmitter is adapted to convert the signal received from the communication terminal into an optical signal and carry out wireless transmission by the optical signal.

6. The system according to any one of claims 2 to 5, wherein the optical transmitter is a light emitting diode or light emitting diode array-based optical transmitter.

7. The system according to claim 6, wherein the light emitting diode or light emitting diode array-based optical transmitter comprises at least a drive circuit and a light emitting diode or light emitting diode array, wherein
the drive circuit is adapted to drive the signal and provide a direct current bias for the light emitting diode or light emitting diode array; and
the light emitting diode or light emitting diode array is adapted to modulate light intensity according to the input signal and carry out wireless transmission by the optical signal.

8. The system according to claim 7, wherein the light emitting diode or light emitting diode array-based optical transmitter further comprises a filter, wherein the filter is adapted to filter out an out-band noise and transmit the filtered signal to the drive circuit.

9. The system according to claim 7, wherein, the light emitting diode or light emitting diode array is an infrared light emitting diode or light emitting diode array, or an illumination light emitting diode or diode array; and
if the light emitting diode or light emitting diode array is an illumination light emitting diode or diode array, the light emitting diode or light emitting diode array is also used for illumination.

10. The system according to any one of claims 2 to 5, wherein the optical receiver comprises a drive circuit, an optical detector and a filter, and wherein
the drive circuit is adapted to drive the optical detector and provide a direct current bias for the optical detector; the optical detector is driven by the drive circuit to receive an optical signal, and is adapted to convert the received optical signal into an electric signal and transmit the electric signal to the filter; the filter is adapted to filter off out-band noise and transmit the filtered signal to the electric demodulator; and
the optical detector is an infrared light detector or illumination light detector.

11. The system according to claim 10, wherein the optical detector is a photosensitive diode or a solar panel;
if the optical signal is illumination light, the photosensitive diode is an illumination light sensitive diode; and
if the optical signal is infrared light, the photosensitive diode is an infrared light sensitive diode.

12. The system according to claim 2 or 4, wherein the interface receiving unit is a wired interface receiving unit and the interface transmitting unit is a wired interface transmitting unit; or, the interface receiving unit is a wireless interface receiving unit and the interface transmitting unit is a wireless interface transmitting unit.

13. The system according to claim 3 or 4, wherein
the electric modulator is an orthogonal frequency division multiplexing-based electric modulator, a spread spectrum-based electric modulator, or an Ethernet physical layer-based electric modulator; and
the electric demodulator is an orthogonal frequency division multiplexing-based electric demodulator, a spread spectrum-based electric demodulator, or an Ethernet physical layer-based electric demodulator.

14. The system according to claim 13, wherein
the orthogonal frequency division multiplexing-based electric modulator comprises a channel encoding unit, a symbol mapping unit and an orthogonal frequency division multiplexing-based modulator, wherein the channel encoding unit is adapted to receive a signal to be transmitted and perform channel encoding on the signal, the symbol mapping unit is adapted to perform symbol mapping on the channel-coded signal with a constellation diagram for digital modulation, and the orthogonal frequency division multiplexing-based modulator is adapted to perform orthogonal frequency division multiplexing modulation on symbol-mapped symbols; and
the orthogonal frequency division multiplexing-based electric demodulator comprises a channel decoding unit, a symbol demapping unit and an orthogonal frequency division multiplexing-based demodulator, wherein the orthogonal frequency division multiplexing-based demodulator is adapted to perform orthogonal frequency division multiplexing demodulation on the received signal, the symbol demapping unit is adapted to perform symbol demapping on the orthogonal frequency division multiplexing-demodulated signal with a constellation diagram for digital modulation, and the channel decoding unit is adapted to perform channel decoding on the received signal.

15. The system according to claim 13, wherein
the orthogonal frequency division multiplexing-based electric modulator is an electric x Digital Subscriber Line modulator, an electric Cable modulator, or an electric power line communication modulator; and
the orthogonal frequency division multiplexing-based electric demodulator is an electric x Digital Subscriber Line demodulator, an electric Cable demodulator, or an electric power line communication demodulator.

16. The system according to claim 13, wherein the spread spectrum-based electric modulator and electric demodulator are direct sequence spread spectrum-based electric modulator and electric demodulator, frequency hopping-based electric modulator and electric demodulator, time hopping-based electric modulator and electric demodulator, or chirp-based electric modulator and electric demodulator.

17. The system according to claim 12, wherein if the interface receiving unit is a wired interface receiving unit and the interface transmitting unit is a wired interface transmitting unit, the illumination and communication device is connected to the remote communication apparatus directly through a wired cable, and the wired cable is a telephone cable, a cable television cable, an Ethernet cable or a power cable.

18. The system according to claim 1, wherein the illumination and communication terminal is located in or outside the communication terminal; and
if the illumination and communication terminal is located outside the communication terminal, one illumination and communication terminal communicates with one or more communication terminals through wired or wireless transmission.

19. The system according to claim 1, wherein the communication terminal is a computer, a mobile telephone, a fax machine, a fixed telephone, a PDA or a network television.
